# EUROPEAN PATENT APPLICATION

(11) **EP 1 388 574 A1**
(43) Date of publication of application: **11.02.2004**
(21) Application number: 02078267.8
(22) Date of filing: 05.08.2002
(51) Int. Cl.: C09D 5/03, C09D 7/12

(54) **Powder paint composition**

(71) Applicant: DSM IP Assets B.V., 6411 TE Heerlen (NL)
(72) Inventor: Grisnich, Willem, 8131 PD Wijhe (NL); van Benthem, Rudolfus Antonius Theodorus Maria, 6141 BR Limbricht (NL); Gijsman, Pieter, 6191 NM Beek (NL)
(74) Representative: van Tol-Koutstaal, Charlotte Adeliene

(57) **Abstract**

The invention relates to a powder paint composition comprising:
a) a compound comprising hydroxyalkylamide units
b) a stabilizer and
c) a compound capable of reacting with hydroxyalkylamide units,
whereby said compound a) comprising hydroxyalkylamide units is a branched condensation polymer containing ester groups, having at least one amide group in the backbone, having at least one hydroxyalkylamide end group and having a weight average molecular mass of at least 800 g/mol and,
whereby said stabilizer b) is at least one phenolic anti-oxidant according to formula (I) 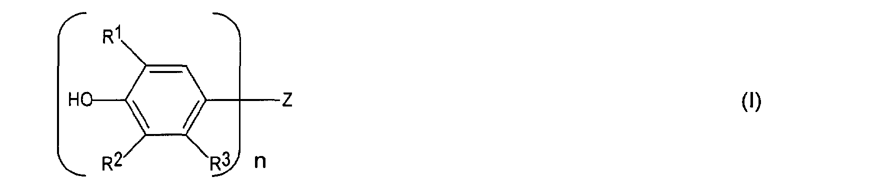 wherein
R¹ is an, optionally substituted, alkyl or cycloalkyl with at least 4 C-atoms
R² and R³ are identical or different, and can independently of each other be H, or (C₁-C₁₈) (cyclo)alkyl radicals,
Z is an mono-, bis- or multifunctional organic group,
and n=1-4,
whereby when n=1, Z contains at least 3 C-atoms or heteroatoms.

The invention also relates to the powder coating obtained after curing of the powder paint composition and to wholly and partly coated substrates.

## Description

The invention relates to a powder paint composition comprising a compound comprising hydroxyalkylamide units, a stabilizer and a compound capable of reacting with hydroxyalkylamide units. The invention also relates to the coating obtained after curing of the powder paint composition and to wholly and partly coated substrates.

Powder paint compositions are subject to discolouration during curing of the composition. The colour characteristics of the coating after curing, especially in a directly fired gas oven, have to be improved. For example, it is known that although some epoxy-polyester hybrid powder coatings have relatively good colour characteristics after curing in an electrical oven, the colour properties after curing in a directly fired gas oven need to be improved.

A powder paint composition with colour and heat stability is known from WO01/68781, wherein the composition contains a compound comprising carboxylic acid units, a compound comprising hydroxyalkylamide units and a stabilizer combination of at least one phosphite and either a) one or more aromatic amine(s) or b) one or more phosphinic acid(s), optionally combined with one or more phenolic anti-oxidant(s). However, for some applications the colour properties of the coating have to be improved, especially when the powder paint composition is cured in a directly fired gas oven. Furthermore, WO 01/68781 discloses that for curing in a directly fired gas oven, the use of a combination of a phenolic anti-oxidant and a phosphite further combined with either an aromatic amine or an phosphinic acid is not desired.

The object of the invention is to provide a powder paint composition resulting in a coating with improved colour characteristics after curing.

This object is reached by the invention with a powder paint composition comprising:
a) a compound comprising hydroxyalkylamide units
b) a stabilizer and
c) a compound capable of reacting with hydroxyalkylamide units
whereby compound a) comprising hydroxyalkylamide units is a branched condensation polymer containing ester groups, having at least one amide group in the backbone, having at least one hydroxyalkylamide end group and having a weight average molecular mass of at least 800 g/mol and,
whereby stabilizer b) is at least one phenolic anti-oxidant according to formula (I) 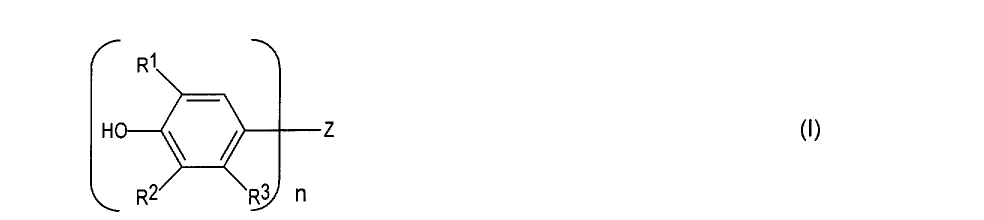 wherein
R¹ is an, optionally substituted, alkyl or cycloalkyl with at least 4 C-atoms
R² and R³ are identical or different, and can independently of each other be H, or (C₁-C₁₈) (cyclo)alkyl radicals, Z is an mono-, bis- or multifunctional organic group, and n=1-4, whereby when n=1, Z contains at least 3 C-atoms or heteroatoms.

The powder paint composition according to the invention after curing results in a coating having improved colour properties.

An additional advantage of the powder paint composition according to the invention is that these improved colour properties are reached after curing in an electrical oven as well as in a directly or indirectly fired gas oven. Furthermore, other desirable properties, for example impact resistance, heat stability, chemical resistance and flow, are obtained.

Preferably the powder paint composition does not contain a combination of a phosphite with an aromatic amine or a combination of a phosphite with a phosphinic acid. It has been found that when the powder paint composition according to the invention is void of phosphite in combination with an aromatic amine or in combination with a phosphinic acid, the colour properties after cure are better, especially when cured in a directly fired gas oven. In the most preferred embodiment of the invention the powder paint composition does not contain a phosphite.

A powder paint composition generally comprises a binder composition and additives. The binder composition generally comprises a resin and a crosslinker, which have complementary functional groups to form a network. The difference between the resin and the crosslinker is the relative amount in which they are present in the binder composition. Usually the resin is present in an amount of equal to or more than 50 wt % relative to the weight of the binder composition, whilst the crosslinker is present in an amount of less than 50 wt % relative to the weight of the binder composition. In the powder paint composition according to the invention, the binder composition comprises the compounds a) and c).

In one embodiment of the invention the powder paint binder composition comprises compound a) as crosslinker and compound c) as resin. In this case the weight ratio between the compound a) and the compound c) may for example range between 30 : 70 and 3 : 97, and is preferably between 20 : 80 and 5 : 95. The selection of this ratio may be governed by the envisaged application.

According to another embodiment of the invention the powder paint binder composition comprises a binder composition which contains compound a) as resin, and compound c), being preferably a polymer, as crosslinker.

The compound a) is a branched condensation polymer containing ester groups, at least one amide group in the backbone and having at least one hydroxyalkylamide end group and having a weight average molecular mass of at least 800 g/mol. A polymer generally comprises a backbone, at least two end groups, and optionally side chains. Examples of suitable branched condensation polymers, which may be applied as the crosslinker or as the resin in the powder paint composition according to the invention, are disclosed in WO-A-99/16810, which content is incorporated herein by reference. The branched condensation polymer may contain hydroxyalkyl amide groups having a weight average molecular mass of between 800 and 50000 g/mol, a number average molecular mass (Mₙ) of between 600 and 10000 and a hydroxyalkylamide functionality of between 2 and 250.

According to WO 99/16810 it is also possible to obtain these condensation polymers by reacting a cyclic anhydride with an alkanolamine, resulting in a hydroxylamide that is converted into a polymer by polycondensation. Preferably the molar ratio between anhydride and the alkanolamine is between 1:1 and 1:2. The use of a higher molar ratio results in a crosslinked product with less desirable properties due to the presence of too many aminegroups in the crosslinker. Using a lower molar ratio results in a low amount of crosslinks in the crosslinked product. Preferably the molar ratio between anhydride and alkanolamine is between 1:1.1 and 1:1.5.

According to a preferred embodiment of the invention the anhydride is succinic acid anhydride, hexahydrophthalic acid anhydride and/or phthalic acid anhydride and the preferred alkanolamine is di-isopropanol amine, which results in good reactivity and good colour properties of the crosslinked product.

Even more preferred is the hydroxylalkylamide unit comprising compound prepared by the reaction between phthalic acid anhydride with di-isopropanol amine. An advantage of this preference is the high hardness of the crosslinked product. Most preferred is a molar ratio of phthalic acid anhydride to di-isopropanol amine of between 1:1.1 and 1:1.4.

The stabilizer b) is at least one phenolic anti-oxidant according to formula (I).

Examples of suitable groups for R¹ in formula (I) are tertiary butyl, methylcyclohexyl, tertiary pentyl, 1-methyl pentadecyl and isopentane. Most preferably R¹ is a tertiary butyl group.

Examples of suitable groups for R² and R³ in formula (I) are methyl, ethyl, n-propyl, isopropyl, isobutyl, butyl, tert-butyl, isopentyl, pentyl, neopentyl, tert-pentyl, isohexyl, hexyl and/or cyclohexyl. Preferably one of the groups R² and R³ is H when the other group is something else than hydrogen. Preferably R² is a methyl group and R³ is hydrogen. Another preference is when R³ is a tertiary butyl group and R² is hydrogen.

Examples of suitable groups for Z in formula (I) are mono-, bis- or multifunctional alkyl groups, esters, ethers or amides. They can also contain other heteroatoms, for example Si and S.

Preferably n= 2 or 4 in formula (I). Most preferably n=2.

Preferably use is made of commercially available phenolic antioxidants, for example 3,5-bis(1,1-dimethylethyl)-4-hydroxy-octadecyl ester, 4,4'-butylidenebis (6-t-butyl-3-methyl-phenol), 1,1,3-tris (2-methyl-4-hydroxy-5-t-butyl phenyl) butane, 3,3-bis(3-t-butyl-4-hydroxyphenyl) ethylene ester, 1,3,5-tris(3',5'-di-t-butyl-4'-hydroxybenzyl)-s-triazine-2,4,6-(1H,3H,5H)trione, 3-(3,5-di-t-butyl-4-hydroxyphenyl) propion acid ester with 1,3,5-tris (2-hydroxy-ethyl)-iso-cyanurate, tetrakis [methylene (3,5-di-t-butyl-4-hydroxyhydrocinnamate)] methane, N,N'-hexamethylene bis (3,5-di-t-butyl-4-hydroxyhydrocinnamamide, 3,9-bis(1,1-dimethyl-2-(β-(3-t-butyl-4-hydroxy-5-methyl-phenyl)-propyonyl-oxy)-ethyl)-2,4,8,10-tetraoxospiro, 4,4'-methylenebis (2,6-di-t-butylphenol), tri-ethylene-glycol-bis-3-(t-butyl-4-hydroxy-5-methyl-phenyl)-propionate, 1,6-hexane-diol-bis-3-(3,5-di-t-butyl-4-hydroxyphenyl)-propionate, 2,6-di-t-butyl-4-sec-butyl-phenol, N,N'-1,3-propanediylbis(3,5-di-t-butyl-4-hydroxyhydrocinnamamide).

According to a preferred embodiment of the invention compound b) is tetrakis [methylene (3,5-di-t-butyl-4-hydroxyhydrocinnamate)] methane or 4,4'-butylidenebis (6-t-butyl-3-methyl-phenol). It was found that these phenolic antioxidants yield the best results.

The phenolic anti-oxidant may be present in a concentration, relative to the weight of the binder composition of at least 0.01 wt%. In an amount of less than 0.01 wt% no effect of the presence of the phenolic anti-oxidant was observed. Preferably the phenolic anti-oxidant is present in an amount equal to or less than 5 wt%, more preferably in an amount from 0.25 to 2.5 wt%, even more preferably in an amount from 0.4 to 2.0 wt% and most preferably in an amount from 0.4 to 1.5 wt %. For some compositions the presence of an amount of phenolic-antioxidant higher than 5 wt% may lead to a deterioration of the desired colour properties.

The stabilizer b), optionally together with other additives, may be added to the resin, to the crosslinker, to the binder composition consisting of the resin and the crosslinker, and/or to the powder paint composition. It is also possible to add the phenolic stabilizer to the resin or the crosslinker during the synthesis of the resin and/or the crosslinker.

According to a preferred embodiment of the invention the phenolic anti-oxidant according to formula (I) is added to the resin during the resin synthesis. This results in a better mixing of the components and consequently a lower amount of phenolic anti-oxidant needed to obtain the same results in comparison to adding the anti-oxidant in another stage of the preparation of the powder paint composition.

The compound capable of reacting with hydroxyalkylamide units is for example a compound comprising carboxylic acid units, isocyanate units, amino units or a combination of any of them. The wording 'units' is intended to refer to both the structural group itself as its derivatives. Also compounds functionalized with carboxylic acid units, isocyanate units, amino units or a combination of any of them, may be suitable for the invention. Compound c) preferably is a compound comprising carboxylic acid units. Compound c) is even more preferably a polymer containing carboxyl groups or containing anhydride groups. Suitable polymers containing carboxyl groups or containing anhydride groups may include for example a polyester, a polyacrylate, a polyether (for example a polyether based on bisphenol or a phenolaldehyde novolak), a polyurethane, a polycarbonate, a trifluoroethylene copolymer or a pentafluoropropylene copolymer, a polybutadiene, a polystyrene and/or a styrene maleic anhydride copolymer.

According to a preferred embodiment of the invention the polymer is a polyester.

Polyesters are generally based on the residues of aliphatic polyalcohols and polycarboxylic acids.

The polyester may comprise units of for example isophtalic acid, terephthalic acid, 2,6-naphthalene dicarboxylic acid and 4,4'-oxybisbenzoic acid.

Other suitable aromatic, cycloaliphatic and/or acyclic polycarboxylic acids useful herein include, for example, 3,6-dichloro phthalic acid, tetrachloro phthalic acid, tetrahydro phthalic acid, hexahydro terephthalic acid, hexachloro endomethylene tetrahydro phthalic acid, phthalic acid, azelaic acid, sebacic acid, decane dicarboxylic acid, adipic acid, succinic acid and maleic acid. These other carboxylic acids can be used in amounts of up to for example 25 mol% of the total amount of carboxylic acids. These acids may be used as such, or, in so far as available as their anhydrides, acid chlorides or lower alkyl esters. Small amounts of trifunctional acids for example trimelittic acid may be applied to obtain branched polyesters.

Hydroxy carboxylic acids and/or optionally lactones can also be used, for example, 12-hydroxy stearic acid, hydroxy pivalic acid and ε-caprolactone. Monocarboxylic acids may, if desired, be used in minor amounts. Examples of these acids are benzoic acid, tert.-butyl benzoic acid, hexahydro benzoic acid and saturated aliphatic monocarboxylic acids.

Useful polyalcohols, in particular diols, reactable with the carboxylic acids to obtain the polyester include aliphatic diols. Examples are ethylene glycol, propane-1,2-diol, propane-1,3-diol, butane-1,2-diol, butane-1,4-diol, butane-1,3-diol, 2,2-dimethylpropanediol-1,3 (= neopentyl glycol), hexane-2,5-diol, hexane-1,6-diol, 2,2-bis-(4-hydroxy-cyclohexyl)-propane (hydrogenated bisphenol-A), 1,4-dimethylolcyclohexane, diethylene glycol, dipropylene glycol, 2,2-bis[4-(2-hydroxy ethoxy)-phenyl] propane, the hydroxy pivalic ester of neopentyl glycol, butylethylpropane diol and ethylmethylpropane diol.

Small amounts, for example less than about 20 wt % and preferably less than 15 wt %, of trifunctional alcohols may be used in order to obtain branched polyesters. Examples of suitable polyols include glycerol, hexanetriol, trimethylol ethane, trimethylol propane and tris-(2-hydroxyethyl)- isocyanurate. Examples of suitable polyfunctional alcohols and acids are sorbitol, pentaerythritol and pyromellitic acid.

The polyester may be prepared according to conventional methods by esterification or transesterification, optionally in the presence of customary esterification catalysts for example dibutyltin oxide or tetrabutyl titanate. Preparation conditions and the COOH/OH ratio can be selected by person skilled in the art in order to obtain end products that have an acid number and/or a hydroxyl number within the targeted range of values.

Generally, the polymer has an acid value between 20 and 120 mg KOH/gram resin and more preferably between 20 and 80 mg KOH/gram resin.

The number average molecular weight (Mn) of the polymer may be for example between 2000 and 6000.

The polymer preferably has a viscosity at 158°C that is lower than 150 Pa.s. The glass temperature, Tg, of the polymer preferably ranges between 20°C and 80°C.

The preparation of thermosetting powder coatings in general and the chemical curing reactions of powder paints to cured coatings are described by Misev in Powder Coatings, Chemistry and Technology (1991, John Wiley) on pp. 42-54, pp. 148 and 224-226.

Curing of the composition may take place in an electrical oven, a directly fired gasoven, an indirectly fired gasoven or by IR-radiation.

The colour properties of the powder coating can be expressed in a b*-value, measured with a Dr Lange Micro Color Meter measured at a layer thickness of 60 µm according to ISO 7724.

Preferably the b* is as low as possible. The b*-value may differ with the cure conditions, such as cure method, cure temperature and cure time. Furthermore the b*-value is dependent on the hiding power of the used pigment. Preferably, the b* of a powder coating pigmented with TiO₂ (for example Kronos ^{TM} 2160 or 2310) after a ten minute cure in a gas oven (NOx) at 215 °C is equal to or lower than 5.

For an electrical oven, the b* of a powder coating pigmented with TiO₂ after a ten minute cure at 180 °C is preferably equal to or lower than 1.

It is also possible to add additional stabilizers to the powder paint binder composition according to the invention. Suitable additional stabilizers include for example: hindered amine light stabilizers (HALS), lactones, hydroxylamines and UV-absorbers for example hydroxybenzophenones, hydroxybenzotriazoles, triazines for example 2-[4,6-diphenyl-1,3,5-trazin-2-yl]-5-(hexyl)oxy-phenol (Tinuvin^{TM} 1577, Ciba Specialty Chemicals) or 2,4-bis (2,4-dimethylphenyl)-6-(2-hydroxy-4-n-octyloxyphenol)-1,3,5-triazine (Cyasorb^{TM} UV1164, Cytec).

If desired, the usual additives, for example pigments, fillers, degassing agents, catalysts, flow-promoting agents can be incorporated into the binder composition and the powder paint composition.

The powder paint composition according to the invention can be used together with or without pigments. If pigments are used those that have no interaction with the selected catalyst are preferred. If pigments are used both inorganic and organic pigments are suitable for example, titanium dioxide, zinc sulphide, iron oxide and chromium oxide, and as organic pigments, for example azo compounds.

Suitable fillers include for example metal oxides, silicates, carbonates and sulphates.

Examples of degassing agents are benzoin and cyclohexane dimethanol bisbenzoate. The range of flow-promoting agents includes for instance polyalkyl acrylates, fluorocarbons and silicon oils. Other suitable additives are for example additives for improvement of the triboelectric chargeability, for example sterically hindered tertiary amines which are described in EP 0 371 528.

The present invention further relates to the use of powder paint compositions according to the present invention for coating a substrate. Powder paint compositions according to the invention may be applied in the customary manner, for example by electrostatic spraying of the powder onto an earthed substrate and by curing the paint by exposing it to heat at a suitable temperature and for a sufficiently long time. The applied powder can be heated and cured, for example, in a directly or indirectly fired gas oven or in an electric oven or by means of infrared irradiation.

Thermosetting coatings based on powder paint compositions for industrial applications are further described in a general sense in Powder Coatings, Chemistry and Technology, Misev, pp. 141-173 (1991).

The invention also relates to a substrate coated with a coating obtained after curing of the powder paint composition according to the present invention. The powder paint compositions according to the invention may be applied on, for example, metal, wood and plastic substrates. Examples are industrial coatings, coatings for machines and tools, domestic applications and component parts of buildings. The powder paint compositions according to the invention are further suitable for use in the automotive industry for coating of parts and accessories. The powder paint composition according to the invention may also be used for example in other technical fields of the coating industry, in toner compositions, in printing ink applications and in the technical field of adhesives applications.

Preferably the powder paint composition according to the invention results in a coating having a b* value according to ISO 7724 of lower than or equal to 5 obtained after curing of the powder paint composition in a directly fired gas oven for ten minutes at 215 °C. According to another embodiment of the invention the powder paint composition results in a coating having a b* value according to ISO 7724 of lower than or equal to 1 obtained after curing of the powder paint composition in an electrical oven for ten minutes at 180 °C. Most preferably the powder paint composition according to the invention is such that when it would be cured in a directly fired gas oven or in an electrical oven under the respective circumstances as mentioned above it would result in respectively a coating having a b* value according to ISO7724 of lower than or equal to 5 after curing in the directly fired gas oven and lower than or equal to 1 after curing in an electrical oven.

The invention further relates to a coating having a b* value according to ISO 7724 of lower than or equal to 5 obtained after curing of a powder paint composition according the invention in a gas oven for ten minutes at 215 °C.

The invention further relates to a coating having a b* value according to ISO 7724 of lower than or equal to 1 obtained after curing of a powder paint composition according the invention in an electrical oven for ten minutes at 180 °C.

Hereafter the invention is further elucidated with some non-limiting examples.

### Examples I and II and Comparative Experiments A and B.

Coating compositions were prepared in the amounts as shown in table 1.

**Table 1.**

| Amounts (wt. parts) of compounds in the coating compositions. | | | | |
|---|---|---|---|---|
| | Example I | Example II | Comparative Experiment A | Comparative Experiment B |
| Hydroxylalkylamide units Containing compound a) | | | | |
| -Reaction product of a condensation reaction between diisopropanol amine and phthalic anhydride with an acid value of | 16,6 | 15 | | |
| - PRIMID XL-552^{TM} (EMS) | | | 10 | |

| Phenolic anti-oxidant b) | | | | |
|---|---|---|---|---|
| - 4,4'-butylidenebis (6-t-butyl-3-methyl-phenol) | 1,0 | 1,0 | 1,0 | 1,0 |

| Compound c) | | | | |
|---|---|---|---|---|
| Polyester (compound c) | | | | |
| - Uralac^{TM} P873 (DSM) | 83,4 | | 90 | |
| - Uralac^{TM} P5212 (DSM) | | 85 | | |
| - Uralac^{TM} P5127 (DSM) | | | | 50 |

| Epoxy type Crosslinker | | | | |
|---|---|---|---|---|
| - Araldite ^{TM} GT7004 (Vantico AG) | | | | 50 |

To all compositions 50 wt parts TiO₂ was added as a pigment. The compounds as described in the table and the pigment were weighed and premixed in a Kinematica Mixotron MB550. The premix was extruded at 110°C in a PR15M extruder. The extrudate was cooled down to room temperature and grinded with a Retsch2M100 centrifugal mill at 18000 rpm. The grinded composition was sieved at 90µm with a Retsch AS200 digit sieve to yield a powder coating composition. The obtained powder coating compositions were sprayed on non pre-treated steel plates with a Gema Corona PGI Powdergun followed by baking them in a Heraeus hot air electrical oven UT6120 or in a directly fired gas oven at the conditions as shown in the table with results below. The b* values were measured with a Dr. Lange Micro Colour meter at a layer thickness of 60 µm, according to IS07724. The results of these measurements are shown in table 2.

**Table 2.**

| Results of the measurements of b*. | | | | | | |
|---|---|---|---|---|---|---|
| Cure conditions | | | b*- value of | | | |
| Oven type | Time (min) | Temperature (°C) | Example I | Example II | Comparative Experiment A | Comparative Experiment B |
| Electrical oven | 15 | 180 | 0.8 | 0.9 | 1.8 | 0.7 |
| Electrical Oven | 60 overbake | 200 | 2.1 | 1.5 | 3.7 | 1.8 |
| Gas oven | 10 | 215 | 5.0 | 3.9 | 6.6 | 6.4 |

## Claims

1. A powder paint composition comprising:
a) a compound comprising hydroxyalkylamide units
b) a stabilizer and
c) a compound capable of reacting with hydroxyalkylamide units, whereby compound a) comprising hydroxyalkylamide units is a branched condensation polymer containing ester groups, at least one amide group in the backbone and having at least one hydroxyalkylamide end group and having a weight average molecular mass of at least 800 g/mol and whereby stabilizer b) is at least one phenolic anti-oxidant according to formula (I) 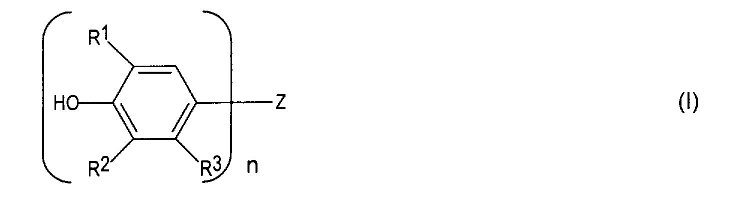
wherein
R¹ is an, optionally substituted, alkyl or cycloalkyl with at least 4 C-atoms
R² and R³ are identical or different, and can independently of each other be H, or (C₁-C₁₈) (cyclo)alkyl radicals,
Z is an mono-, bis- or multifunctional organic group,
and n=1-4,
whereby when n=1, Z contains at least 3 C-atoms or heteroatoms.

2. A composition according claim 1, wherein the composition does not contain a phosphite.

3. A composition according to any one of claims 1-2, wherein the compound a) is prepared by the reaction between succinic acid anhydride, hexahydrophthalic acid anhydride and/or phthalic acid anhydride with di-isopropanol amine.

4. A composition according to any one of claims 1-3, wherein the compound c) is a compound containing carboxylic acid units.

5. A composition according to any one of claims 1-4, whereby the stabilizer b) is mixed with compound c) during the synthesis of compound c).

6. A composition according to any one of claims 1-5, wherein the stabilizer b) is tetrakis [methylene (3,5-di-t-butyl-4-hydroxyhydrocinnamate)] methane or 4,4'-butylidenebis (6-t-butyl-3-methyl-phenol).

7. Use of a powder coating composition according to any one of claims 1-6 for coating a substrate.

8. A coating having a b* value according to ISO 7724 of lower than or equal to 5 obtained after curing of a powder paint composition according to any one of claims 1-6 in a gas oven for ten minutes at 215 °C.

9. A coating having a b* value according to ISO 7724 of lower than or equal to 1 obtained after curing of a powder paint composition according to any one of claims 1-6 in an electrical oven for ten minutes at 180 °C.

10. A substrate coated with a coating obtained after curing of the powder paint composition according to any one of claims 1-6 or with a coating according to any one of claims 8-9.
